Europäisches Patentamt

(19) European Patent Office

Office européen des brevets

(11) Publication number: **0 248 462 B1**

# EUROPEAN PATENT SPECIFICATION

(12)

(45) Date of publication of patent specification :
**16.10.91 Bulletin 91/42**

(51) Int. Cl.[5] : **A23G 1/00, A23G 1/04, A23C 1/03**

(21) Application number : **87200893.3**

(22) Date of filing : **14.05.87**

(54) **A process for preparing a raw material for milk chocolate.**

The file contains technical information submitted after the application was filed and not included in this specification

(30) Priority : **16.05.86 NL 8601256**

(43) Date of publication of application :
**09.12.87 Bulletin 87/50**

(45) Publication of the grant of the patent :
**16.10.91 Bulletin 91/42**

(84) Designated Contracting States :
**AT BE CH DE FR GB IT LI LU NL**

(56) References cited :
**WO-A-80/01869
DE-C- 92 710
FR-A- 360 358
FR-A- 378 051
FR-A- 398 941
FR-A- 521 111**

(56) References cited :
**FR-A- 2 077 611
GB-A- 429 048
GB-A- 2 095 531
US-A- 1 560 598
US-A- 2 211 740
VOEDING & TECHNIEK, vol. 1, no. 12, 18th July 1967, page 311; "Nieuw instant-cacao produkt uit Engeland"**

(73) Proprietor : **Verenigde Coöperatieve Melkindustrie Coberco B.A.
Nieuwstad 69
NL-7201 NM Zutphen (NL)**

(72) Inventor : **Verheij, Jacobus Gerardus Petrus
Veldweidelaan 1
NL-7231 DS Warnsveld (NL)**

(74) Representative : **Smulders, Theodorus A.H.J., Ir. et al
Vereenigde Octrooibureaux Nieuwe Parklaan 107
NL-2587 BP 's-Gravenhage (NL)**

EP 0 248 462 B1

## Description

This invention relates to a process for preparing a raw material for milk chocolate, which comprises kneading and drying a concentrated mixture of milk, sugar and optionally cocoa mass to form a homogeneous mass.

In the chocolate processing industry milk chocolate is prepared using milk constituents to which sugar and, if desired, cocoa mass are added.

The composition of the ingredients is often so chosen that only cocoa butter and emulsifiers are required for arriving at the composition of milk chocolate. This particularly applies to the mixture which, in addition to milk constituents and sugar, also contains cocoa mass. In dried form this mixture is generally designated as 'crumb'. If the cocoa mass is omitted from the mixture, the dried product is called 'block milk'.

In the preparation of crumb and block milk products are formed having a characteristic flavour. This is achieved during the preparation as a result of maillardization and/or caramelization.

The chocolate processing industry imposes strict requirements on the flavour and the appearance of crumb and block milk because these products considerably determine the 'flavour and colour aspect' of the final product.

A problem occurring in the preparation of crumb and block milk is that it is very difficult to arrive at a uniform product, the flavour <u>and</u> colour of which satisfy the requirements imposed. In other words, the flavour and colour development should be controllable without basically affecting the drying process.

One of the solutions that were found in the past is to modify the recipe of the crumb and the block milk. This has the drawback that a final composition is obtained which is not desired by the chocolate processing industry. Another possibility to arrive at the solution of the above problem is to carry out partial processes outside the actual crumb and block milk preparation. For instance, sugar can be caramelized in dry form by applying a so-called dry-heating process at a temperature of 180-210°C. It is further known to heat a sugar solution at a temperature of 120-160°C. The caramelized sugar (solution) is then mixed with the other crumb or block milk components and processed further. This process, however, is very laborious and therefore uneconomical.

Finally, attempts have been made to affect the maillardization by adding amino acids (preferably lysine) and reducing sugards (mostly glucose). Given a specific process the control possibility is in the dosage of these components. This use, however, gives no sufficient guarantee that the contemplated result is obtained.

The object of this invention therefore is to manufacture crumb or block milk products that are uniform, and the flavour and colour of which are controllable, starting from a given composition.

According to the invention, a concentrated mixture of milk, sugar and optionally cocao mass is kneaded and dried in a continous process step under vacuum for a period of time of 2-4 hours, said mixture being maintained at a temperature ranging from 45°C to not higher than 105°C during the kneading and drying step, during which the temperature of the mixture is increased phasewise.

According to a preferred embodiment, the kneading and drying step is carried out in three phases, said mixture being maintained at a temperature of 45-65°C during the first phase, at a temperature of 65-90°C during the second phase and at a temperature of 90-105°C during the third phase. Finally, it is preferred to carry out the whole process under a pressure of 5-16 kPa.

US-A-2,211,740 describes a process for preparing a raw material for milk chocolate, which comprises kneading and drying a concentrated mixture of milk and sugar under vacuum, whereby the mixture is maintained at a temperature ranging from 49°C to 60°C and the process is carried out under a pressure of 83-93 kPa.

The advantages of the process according to the invention are as follows:

     a. an excellent flavour and colour development due to the homogeneous treatment of kneading and drying under the imposed conditions during a prolonged process;

     b. the kneading treatment leads to a high free fat content, which is favourable to the chocolate production.

The process will be illustrated by the following examples.

Example 1

To 100 1 pasteurized (18 sec., 85°C) and standardized (3.0% fat) milk, 10.7 kg sugar were added and dissolved with stirring. This milk/sugar mixture was condensed by means of a vacuum circulation evaporator which resulted in 34.1 kg thickened product having a moisture content of 32%.

This concentrated product was continuously fed, at a temperature of 56°C, to a horizontal cylindrical drum in which is mounted a horizontal shaft with blades and product guides, said shaft being driven by an electric motor, thus ensuring a continuous kneading effect and a horizontal product transport through the cylinder. To increase the kneading effect, scraper hooks are mounted on the inner wall of the drum in various places. The whole cylinder is provided with a heating jacket and can be vacuumized. The cylinder is provided with two overflow weirs dividing the cylinder in three equal sections.

At a process pressure of about 8 kPa the product was heated to respectively 50°C (first section), 73°C (second section) and 92°C (third section) and thus dried with kneading to form a powder having a final moisture content of 2.5%, a sugar content of 45.0% and a fat content of 12.6%. The total process time was 2.5 hours.

This powder was cream light-brown in colour, had a very characteristic slightly caramelized flavour, contained 1,920 mg/kg hydroxymethylfurfural (HMF) which indicates a certain degree of maillardization, and had a free fat content of 11.7%. The powder had a very homogeneous appearance, without dark-coloured dots or other inhomogeneities.

After addition of cocoa mass, cocoa butter and lecithin this powder could be properly processed to a milk chocolate, which was distinguished by an excellent flavour and by the fact that, because of the high free fat content, relatively little cocoa butter was additionally necessary for adjusting the required viscosity of the chocolate mass for pouring into moulds.

Example 2

To 30.000 1 pasteurized (14 sec, 76°C) and standardized (3.25% fat) milk 4,590 kg sugar were added and dissolved with stirring.

This mixture of milk and sugar was condensed in the manner usual in the dairy industry by means of a vacuum downdraught evaporator which resulted in 11,800 kg concentrate having a moisture content of 28.1%.

This concentrate was mixed with 930 kg cocoa mass (50% fat) and supplied to an apparatus as described in Example 1 at a temperature of 49°C. At a process pressure of about 15 kPa the product was heated to respectively 62°C (first section), 85°C (second section) and 104° (third section) and was thus dried to form a powder having a moisture content of 1.7%, a sugar content of 47.1%, a fat content or free fat content of 14.9 or 13.1% (the milk fat content is 10.1%), a HMF content of 1,450 mg/kg and having an attractive red brown colour, a quite homogeneous appearance and a very characteristic flavour.

This 'crumb' could be properly processed with cocoa butter and lecithin to form a milk chocolate distinguished by an excellent flavour. In the preparation of this milk chocolate the cocoa butter consumption was relatively low.

Claims

1. A process for preparing a raw material for milk chocolate, which comprises kneading and drying a concentrated mixture of milk, sugar and optionally cocoa mass to form a homogeneous mass, characterized in that the mixture of condensed milk, sugar and optionally cocoa mass is kneaded and dried in a continuous process step under a vacuum for a period of time of 2-4 hours, said mixture being maintained at a temperature ranging from 45°C to not higher than 105°C during the kneading and drying step, during which the temperature of the mixture is increased phasewise.

2. A process according to claim 1, characterized in that said kneading and drying step is carried out in three phases, said mixture being maintained at a temperature of 45-65°C during the first phase, at a temperature of 65-90°C during the second phase and at a temperature of 90-105°C during the third phase.

3. A process according to claims 1-2, characterized in that it is carried out under a pressure of 5-16 kPa.

Patentansprüche

1. Bereitungsverfahren von Rohmaterial für Milchschokolade, welches die Knetung und Trocknung einer konzentrierten Mischung aus Milch, Zucker und eventuell Kakaomasse zur bildung einer homogenen Masse umfaßt, dadurch gekennzeichnet, daß die Mischung aus kondensierter Milch, Zucker und eventuell Kakaomasse in einem kontinuierlichen Verfahrensschritt unter einem Vakuum für eine Zeitspanne von 2-4 Stunden geknetet und getrocknet wird, wobei die Mischung bei einer Temperatur gehalten wird, die von 45° C bis zu höchstens 105° C während des Knetungs- und Trocknungsschritts reicht, während welchem die Temperatur der Mischung stufenweise erhöht wird.

2. Verfahren nach Anspruch 1, dadurch gekennzeichnet, daß der Knetungs- und Trockungsschritt in drei Stufen durchgeführt wird, wobei die Mischung während der ersten Stufe bei einer Temperatur von 45-65° C, während der zweiten Stufe bei einer Temperatur von 65-90° C und während der dritten Stufe bei einer Temperatur von 90-105° C gehalten wird.

3. Verfahren nach den Ansprüchen 1-2, dadurch gekennzeichnet, daß es unter einem Druch von 5-16 kPa durchgeführt wird.

Revendications

1. Procédé pour la préparation d'une matière première pour du chocolat au lait, qui comprend le pétrissage et le séchage d'un mélange concentré d'une masse de lait, de sucre et en option de cacao de façon à former une masse homogène, caractérisé en ce que le mélange de la masse de lait concentré, sucre et en option cacao est pétri et séché en une étape d'un processus continu sous vide pendant une durée de 2 à 4 heures, ce mélange étant maintenu dans une plage de température allant de 45 à 105 degrés C maximum pendant l'étape de pétrissage et de séchage, pendant laquelle la température du mélange augmente par phase.

2. Procédé conforme à la revendication 1, caractérisé en ce que l'étape de pétrissage et de séchage est réalisée en trois phases, ce mélange étant maintenu à une température de 45-65 degrés C pendant la première phase, à une température de 65-90 degrés C pendant la seconde phase et à une température de 90-105 degrés C pendant la troisième phase.

3. Procédé conforme aux revendications 1-2, caractérisé en ce qu'il est réalisé sous une pression de 5-16 kPa.